Europäisches Patentamt

(19) European Patent Office

Office européen des brevets

(11) Publication number: **0 053 907**
**A2**

(12) **EUROPEAN PATENT APPLICATION**

(21) Application number: **81305665.2**

(22) Date of filing: **01.12.81**

(51) Int. Cl.³: **G 11 B 23/06**
**G 11 B 15/66, G 11 B 15/18**

(30) Priority: **08.12.80 US 214042**
**30.04.81 US 259184**

(43) Date of publication of application:
**16.06.82 Bulletin 82/24**

(84) Designated Contracting States:
**DE FR GB IT**

(71) Applicant: **MINNESOTA MINING AND**
**MANUFACTURING COMPANY**
**3M Center, P.O. Box 33427**
**St. Paul, MN 55133(US)**

(72) Inventor: **Moris, Alfred H.**
**2501 Hudson Road P.O. Box 33427**
**St. Paul Minnesota 55133(US)**

(74) Representative: **Baillie, Iain Cameron et al,**
**c/o Ladas & Parry Isartorplatz 5**
**D-8000 München 2(DE)**

(54) **Endless loop tape cartridge.**

(57) A cartridge including a fixed hub (14) having a central opening (16) and a slot (17) communicating with the opening (16), and an endless length of magnetic tape (22) having a major portion coiled about the hub (14) and a minor portion extending from the innermost wrap of the coil (26), through the slot (17) and around the side surface of the coil (26) to the coil's outermost wrap. Means on the housing (12) defining a tape path for the minor tape portion include a spring (72) biased movable guide pin (34) that provides a desired low, predetermined tension in the outermost wrap of the coil (26), which in turn produces a relatively high, generally uniform tension in tape (22) being pulled from the coil (26) through the slot (17). A portion (13) of the hub (14) can be moved radially to adjust the length of the minor tape portion, and a lock assembly (15) is provided for restricting movement of tape (22) in the coil (26) during shipping.

FIG.1

## ENDLESS LOOP TAPE CARTRIDGE

### Technical Field

The present invention relates to cartridges for magnetic recording and/or playback machines, which cartridges include lengths of magnetizable tape which are spliced into an endless loop; and in one important aspect to such cartridges used in the radio broadcasting industry.

### Background Art

Generally such cartridges include means for supporting the endless loop of tape for travel along a path past one or more access openings defined in the cartridge at which access openings the tape may be engaged by means in a machine to drive it along the path past transducers on the machine also received in the access openings.

Such a cartridge of a type commonly used for radio broadcasting and which can be made to conform to the "Standard" copyrighted in 1976 of the "National Association of Broadcasting" (called NAB herein) for "cartridge tape" is described in U.S. Patent No. 3,350,025. Cartridges generally of the type described in that patent include a rotatable hub about which a major portion of the tape is coiled, and guides for guiding a minor portion of the tape from the innermost wrap of the coil around one edge surface of the coil, past access openings defined on the cartridge, and then to the outermost wrap of the coil. A tape drive mechanism in a recording and/or playback machine can engage the tape at one of the access openings to pull it from the innermost wrap of the coil past transducers or record and playback heads on the machine received in other of the access openings. The guides in this type of cartridge provide most of the guiding for movement of the tape along a path past the heads on the machine in which the cartridge is mounted. Thus if the cartridge is misaligned with the machine, the tape can be driven along a slightly inaccurate path past the heads, resulting in a phase error in the signal produced by the machine. The tension in the tape varies greatly as the splice for the tape (which splice is adhered to one surface of ends of the tape and has a thickness about equal to that of the tape) moves through the coil from its outermost wrap to its innermost wrap, or as relatively thick portions of the tape (which thick portions are caused by normal minute variations in backing thickness and/or coating weights of oxides or graphite along the tape) move into and out of radial alignment in the coil as the wraps of tape in the coil move relative to each other. Such changes in tension may produce flutter and affect tracking of the tape. Also, in such a cartridge the tape is twisted and pulled from the coil around the side surface of the coil while it is under tension from the tape drive mechanism, which tends to wear the tape at a rapid rate, particularly along its edges, thereby reducing the useful life of the tape in the cartridge.

U.S. Patent No. 4,268,877 describes an improved cartridge and a method for driving an endless length of magnetizable tape in the improved cartridge past a transducer which will produce a phase error, wow and flutter comparable to that produced by professional reel-to-reel magnetic tape recorders, and which causes significantly less wear on the tape in the cartridge than is caused on the tape in the type of prior art cartridge described above.

The improved cartridge described in U.S. Patent No. 4,268,877 includes an endless length or loop of tape having a major portion of its length wrapped in a coil around a fixed hub having a central opening. A minor portion of the tape extends from the innermost wrap of the coil through a slot in the hub into the central opening and then around a side surface of the coil to its outermost wrap. If a transducer is positioned in the central opening, and tape is pulled through the slot from the innermost wrap of the coil with the edges of the tape generally coplanar with the edges of the innermost wrap while the tape is guided across the transducer by guides fixed and precisely oriented with respect to the transducer, the phase error of the resultant signal will be very small, especially since the coil will shift axially to provide the best possible alignment between the coil and the guides. Also the surface of the hub supporting the innermost wrap of the coil is defined by annular axially spaced ribs. Such ribs significantly reduce the tension in tape being pulled through the slot as compared to the use of a fixed non-ribbed hub to support the coil by reducing friction between the innermost wrap of the coil and the fixed hub and between adjacent wraps of tape in the coil which move relative to each other as the coil rotates about the hub. Machines which accept such cartridges, however, must have a structure for receiving the magazine with a transducer, guides and a drive mechanism in the central opening of the hub, which structure is substantially different than that of machines presently commonly in use in broadcast studios that utilize cartridges conforming to the "cartridge tape" standards set forth by the NAB. Thus, to use such cartridges it would be necessary for broadcast studios to install new record/playback machines which would be expensive, and would not accept cartridges that do conform to the standards of the NAB which the studio may already have recorded.

## Disclosure of the Invention

The present invention provides a cartridge including a length of magnetic tape spliced into an endless loop, which cartridge can be made to conform to the standard of the NAB so that it can be used in the types of record/playback machines presently in use in the broadcast industry, and which cartridge when made to conform to the standard of the NAB, while slightly less effective in reducing phase error than the cartridge described in Patent No. 4,268,877, causes much less edge wear on the tape and much less change in tension in the tape at a head of a machine in which the cartridge is received than the types of cartridges presently in use in the broadcast industry which conform to the standard of the NAB.

Also, the present invention provides a method by which in the NAB broadcast cartridge described above or other types of cartridges the tension in the tape at a head of a machine in which the cartridge is engaged can be maintained at a relatively high, generally uniform value so that the tape can be pressed against the head via the tension alone without the use of pressure pads (which pressure pads when used are sources of flutter, tape wear, and misguiding of the tape).

The method according to the present invention for providing such high, generally uniform tension comprises providing a fixed generally cylindrical hub having a central opening and a slot extending axially across the full width of the hub and communicating with its central opening, and an endless length of strip material or magnetic tape; wrapping a major portion of the tape about the hub to form a coil while allowing a minor portion of the tape to extend from the innermost wrap of the coil through the slot into the central opening of the hub, and around the side surface of the coil to the outermost wrap of the coil; pulling the tape from the slot and across a head on a record/playback machine; and applying a light force to tension the minor portion of the tape as it moves onto the outer wrap of the coil which will produce the high generally uniform tension in the minor portion of the tape being pulled from the coil and across the head.

The embodiment of the cartridge according to the present invention adapted for use in the broadcast industry which employs that method to tension tape across a head comprises a housing adapted to be received in a record/playback machine and having access openings adapted to receive record/playback heads and a tape drive mechanism in the machine. A generally cylindrical hub is fixed on the housing at a position spaced from the access openings, which hub has a central opening and a slot extending axially across the full width of the hub and communicating with its central opening. An endless length of strip material or magnetic tape has a major portion wrapped about the hub to form a coil and a minor portion extending from the innermost wrap of the coil through the slot into the central opening of the hub, and around the side surface of the coil to the outermost wrap of the coil. Means on the housing define a tape path for, and producing tension in, the minor portion of the tape. The means for defining a tape path for, and producing tension in, the minor portion of the tape comprise means for guiding the minor portion of the tape past the access openings in a predetermined position for engagement by the heads and the drive mechanism of the playback machine, a guide pin guiding the minor portion of the tape between the access openings and the outermost wrap of the coil, means mounting the guide pin for movement between a first position providing a first path length between the access openings and the outer wrap of the coil and a second position providing a second path length longer than the first path length between the access openings and the outer wrap of the coil (which means preferably is an arm having a first end supporting the guide pin, and a second end pivotably mounted on the housing to afford movement of the pin along an arcuate path adjacent the periphery of the coil between its first and second positions), and means for biasing the guide pin toward its second position.

The pin can move to positions between its first and second positions under the influence of the biasing means to accommodate changes in length of the minor portion of the tape which decreases or increases respectively when the length of the major portion increases or decreases. The major portion of the tape cyclically undergoes its largest change in length by slowly decreasing in length as the splice moves from the coil's outer wrap toward its inner wrap and by then suddenly increasing in length as the splice leaves the coil. The means for biasing the guide pin is adapted to apply a small force at the guide pin (e.g., generally in the range of 2 to 14 grams) to lightly tension the tape extending around the pin and moving onto the outermost wrap of the coil, somewhat in the manner of a rope or Proney brake, which light tension produces a significantly higher tension (e.g. generally in the range of 50 to 115 grams or 2 to 4 ounces) in tape leaving the coil. That higher tension is surprisingly uniform (e.g. plus or minus 7 grams or 1/4 ounce) despite small changes in the force applied by the guide pin (e.g., plus or minus 1-1/2 grams) as the length of the minor portion of the tape changes due to the position of the splice along the tape.

The tape is guided so that the quite uniform higher tension thus produced in the minor portion of the tape between the inner wrap of the coil and the drive mechanism of a machine in which the cartridge is engaged presses the tape against the record and playback heads of the machine with sufficient pressure that pressure pads (commonly used in prior art cartridges to press the tape against the heads) are not required, and the tape is thus not subjected to the abrasion and erratic forces caused by sliding contact between the tape and such pressure pads.

Also, the combination of the higher tension in the minor portion of the lower tape between the coil and the drive mechanism and the tension between the drive mechanisms and the outer wrap of the coil prevents loose tape wraps in the coil, thereby restricting wrapping of the tape around the drive capstan. Such wrapping, if it occurs, can damage the tape and/or jam the machine. Such wrapping of tape around the drive capstan occasionally occurs in prior art cartridges due to the inertia of the rotating hub which can push a loop of tape into the area around the drive capstan of a machine when the machine is stopped. Subsequently, when the machine again starts, that loop can wrap around the capstan, or can be engaged and damaged by other moving portions of the mechanism in the machine.

Additionally, there are advantages in the use of the slotted fixed ribbed hub which allows tape to be pulled from the innermost wrap of the coil into the central opening of the hub through the slot with the edges of the tape pulled into the central opening at least generally in the same plane as the edges of the tape in the coil; rather than the use of a rotary hub in which the tape must be pulled from the innermost wrap around a side surface of the coil. Edge damage to the tape is reduced. Also, the tape does not require the heavy graphite coatings that are used in some prior art cartridges to facilitate removal of the inner wrap of the coil, which graphite coatings, when used, can result in graphite debris in the cartridge that can interfere with recording and/or reading information on the tape.

The fixed hub in the cartridge according to the present invention can include a flexible arcuate cantilevered portion having a first end partially defining the slot, a second end that is fixed on the housing, and which is separated from the housing between its ends. Means can be provided for changing the position of the cantilevered hub portion radially of the rest of the hub to adjust the length of the minor portion of the tape and thereby cause the guide pin to move within a desired range of movement between its first and second positions.

Preferably the means for changing the position of the arcuate cantilevered hub portion is provided by a cam rotatably mounted on the housing, which cam has a peripheral surface contacting the inner side of the cantilevered hub portion, and which can be rotated via a tool such as a screwdriver as the tape is being propelled by a machine so that the effects of cam adjustments on the tape can be observed as they are made.

Such adjustability ensures that changes in overall tape length which can occur due to causes such as tape wear can be compensated for.

It is anticipated that such adjustments will not need to be made often during the life of a cartridge, but perhaps could advantageously be made by technicians each time the tape is re-recorded.

Additionally the cartridge according to the present invention can include a lock assembly mounted on the housing for movement between a release portion with the lock assembly entirely enclosed within the housing and spaced from the tape, and a lock position at which a first portion of the lock assembly engages the tape coil and a second portion of the lock assembly projects from the housing. The lock assembly can be moved to its release position or its lock position by manual engagement of its second portion. Also preferably detent means are provided to bias the lock assembly to its release position when the lock assembly is adjacent it, and when the lock assembly is in its lock position its second portion is positioned so that a machine into which the cartridge is inserted will engage and move the second portion of the lock assembly to adjacent its release position from whence the detent means will move the lock assembly to its release position. Thus the machine cannot attempt to move the tape while the tape is being held by the lock assembly.

## Brief Description of the Drawing

The invention will be further described with reference to the accompanying drawing wherein like numbers refer to like parts in the several views, and wherein:

Figure 1 is a horizontal plan view of a first embodiment of a tape cartridge according to the present invention having parts broken away to show details;

Figure 2 is a sectional view taken approximately along line 2-2 of Figure 1;

Figure 3 is a graph relating different forces that can be applied to tape at the outermost wrap of a coil through a guide pin on a pivot arm in the cartridge with the tension in the tape being pulled from the innermost wrap of the coil;

Figure 4 is a horizontal plan view of a second embodiment of a tape cartridge according to the present invention having parts broken away to show details;

Figures 5 and 6 are fragmentary views showing two different lock positions of a locking assembly in the tape cartridge of Figure 4; and

Figures 7 and 8 are sectional views taken approximately along lines 7-7 and 8-8 of Figure 4, respectively.

Detailed Description

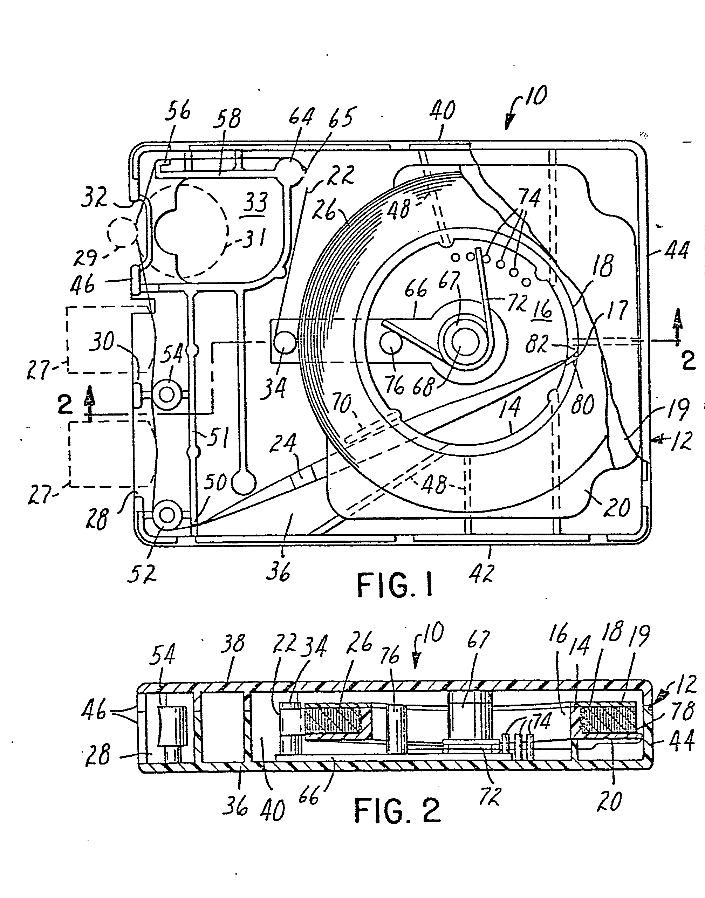

Referring now to Figures 1 and 2 in the drawing, there is shown a first embodiment of a tape magazine or cartridge according to the present invention generally designated by the numeral 10. The cartridge 10 includes a two-piece molded housing 12, an annular hub 14 fixed in the housing 12, which hub 14 has a central opening 16 and a slot 17 communicating between the central opening 16 and a peripheral surface of the hub 14 defined by annular axially spaced ribs 18, and upper and lower opposed flanges 19 and 20 extending radially outwardly from the edges of the hub 14.

A length of strip material or magnetizable tape 22 is spliced into an endless loop by a splice 24. The tape loop has a major portion wound in a coil 26 about the hub 14 between the flanges 19 and 20, and a minor portion extending from the innermost wrap of the coil 26 through the slot 17, and along means for defining a tape path for the minor portion of the tape past access openings 28, 30, 32, and 33 in the cartridge housing 12 (which access openings 28, 30, 32 and 33 are adapted to receive heads 27, and a capstan 29 and a pinch roller 31 of a drive mechanism (shown in dotted outline in Figure 1) for a tape record/broadcast machine (not shown) to the outermost wrap of the coil 26, around a movable guide pin 34 also included in means for producing tension in the minor portion of the tape 22 as it is moved through the cartridge 10, as will later be explained.

The two-piece housing 12 is generally rectangular and comprises a bottom wall 36 in which the access opening 33 is formed, a top wall 38 which is preferably transparent so that the movement of the tape 22 within the housing 12 may be observed, opposite side walls 40 and 42, a rear wall 44 and a front wall 46 in which the access openings 28, 30 and 32 are formed. The outer shape of the housing 12, the positioning and shape of the access openings 28, 30, 32 and 33 for the heads 27, the capstan 29 and the pinch roller 31 of a drive mechanism, and the location of the tape path past the openings 28, 30, 32 and 33 are all in accordance with the "NAB Standard, Cartridge Tape Recording and Reproducing" which is published by the National Association of Broadcasters, 1771 N Street N.W., Washington, D.C. 20036, the content whereof is incorporated herein by reference.

The means for defining the tape path for the tape 22 past the access openings 28, 30, 32 and 33 comprises bosses 48 projecting from the inner surface of the bottom wall 36, which bosses 48 fixedly support the hub 14 and flanges 19 and 20 and space the lower flange 20 from the bottom wall 36 so that tape 22 exiting from the slot 17 will twist about 90 degrees as it passes across the opening 16, and pass with one of its major surfaces against the outer surface of the lower flange 20 between the lower flange 20 and the bottom wall 36, and then twist back to its original orientation and pass around a radiused edge 50 on a wall 51 projecting normal to the bottom wall 36 so that the tape 22 then moves along a minor path portion generally parallel to and along the side wall 42. Also included is a generally cylindrical guide 52 fixed on and projecting from the bottom wall 36 and having concave side surfaces facing the side and front walls 42 and 46, around which guide 52 the tape changes direction to then move parallel to the front wall 46 and across the openings 28, 30 and 32. A second generally cylindrical guide 54 fixed on and projecting from the bottom wall 36 also has a concave surface facing the front wall 46 and with the guide 52 serves to position the tape at a predetermined position axially along the guides 52 and 54 between the top and bottom walls 38 and 36 and with respect to the openings 28, 30 and 32 (and thereby along heads 27 positioned in the openings 28 and 30) by centering the tape across their concave side surfaces, which centering effect is known in the art. An upstanding arcuate wall 56 guides the tape through a 90-degree arc, along the side wall 40 in a channel between the side wall 40 and a portion 58 of an adjacent wall which surrounds the access opening 33 in the bottom wall 36 and to a cylindrical post 64 and wall edge surface 65 at the end of the wall portion 58 opposite the front wall 46. From the wall edge surface 65 the tape extends around the movable guide pin 34 included in the means for providing tension in the minor portion of the tape 22.

The means for maintaining tension in the minor portion of the tape 22 comprises the movable guide pin 34, and means mounting the guide pin 34 for movement provided by an arm 66 having one end on which the guide pin 34 is fixed, and an opposite end having a hollow cylindrical projecting collar 67 journaled about a cylindrical projection 68 from the bottom wall 36 located approximately co-axially with the the hub 14. Pivotal movement of the arm 66 allows the guide pin 34 to move along the periphery of the coil 26 between (1) a first position providing a first path length between the access openings 28, 30, 32 and 33 and the periphery of the coil 26, (which first position is defined by engagement of the arm 66 against one of the bosses 48 adjacent the side wall 40); and (2) a second position providing a second path length longer than the first path length between the access openings 28, 30, 32 and 33 and the coil 26 defined by engagement of the guide pin 34 with one of the bosses 48 adjacent the side wall 42. A spring 72 is coiled about 5 times around the collar 67 and has a first end supported against one lug in an arcuate row of lugs 74 projecting from the bottom wall 36, and an opposite second end engaged against a lug 76 on the arm 66 to provide adjustable means for biasing the movable guide pin 34 towards its second position. The spring 72 is long so that it provides a low force (e.g. in the range of about 2 to 14 grams measured at the pin 34) to press the guide pin 34 against the tape 22 over the relatively small range of movement of the guide pin 34, and the selection of different lugs from the row of lugs 74 allows some adjustment to be made in that force level by engaging the first end of the spring 72 with a selected one of the lugs 74.

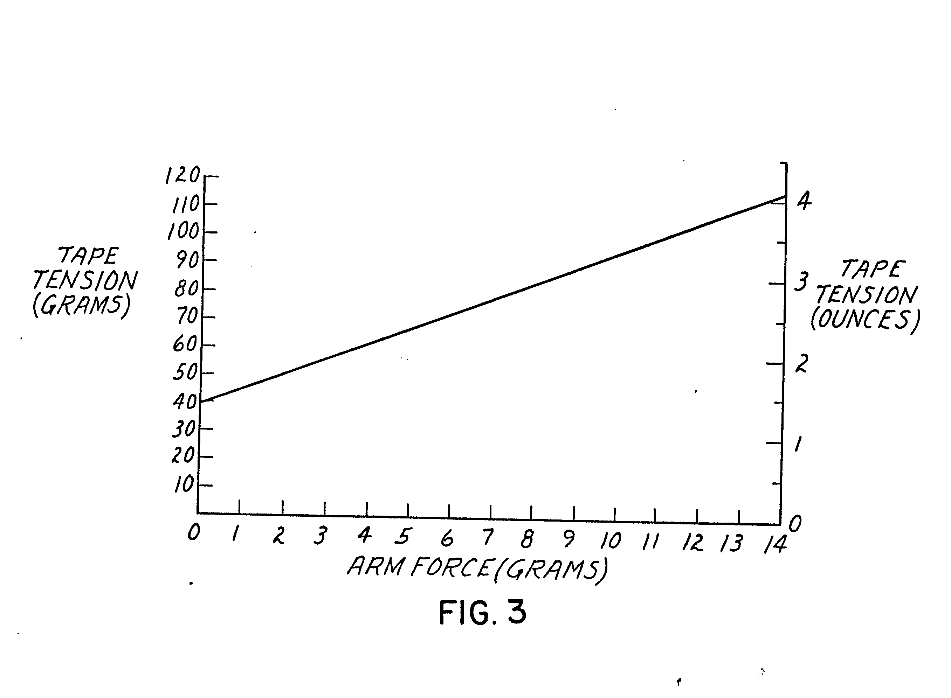

As an example, Figure 3 is a graph showing the relationship between the force applied at the guide pin 34 (which is labeled "ARM FORCE" and is indicated along the horizontal side of the graph) and the resultant tension in the tape 22 being pulled from the innermost wrap of the coil 26 (which is labeled "TAPE TENSION" and is indicated along the vertical side of the graph) when the hub 14 has a diameter of about 5.72 cm (2.25 in.) and the tape 22 loop is about 86 meters (281 ft.) long, 0.635 cm. (0.25 in.) wide and is of the type commercially designated "Scotch Brand No. 158" available from Minnesota Mining and Manufacturing Company of St. Paul, Minn. The "TAPE TENSION" data for the forces applied at the guide pin 34 of below 2 grams is approximate, since, particularly where no force is applied at the guide pin 34, the effect of the splice moving from the outer wrap toward the inner wrap of the coil 26 or other restrictive forces in the coil 26 will cause significant changes and irregularities in the tension in the tape being pulled from the innermost wrap of the coil 26.

Preferably the hub is of polymeric material (e.g., the acetal sold under the trade designation "Celcon" by Celanese Corporation of America, New York, N.Y.) which has been annealed (e.g., for 15 minutes at 180°F.) so that it will achieve the dimension that it would otherwise subsequently achieve during its running cycle if exposed to temperatures up to the annealing temperature. Thus such subsequent annealing of the hub will not cause a substantial change in length in the minor portion of the tape 22 extending around the guide pin 34 which, if it occurred, would change the range of forces applied at the guide pin 34 via the spring 72.

Also, preferably the material from which the hub 14 is molded is filled with material that will modify its coefficient of thermal expansion so that during the substantial temperature increases that can occur during the operation of the cartridge 10 (e.g., over 35 degrees Fahrenheit) the increase in the length of the tape 22 caused by such temperature rise will be offset by the greater length of the tape 10 in the coil 26 due to the increase in thickness of the tape 22 and the increased diameter of the hub 14 so that there will be no substantial change in the length of the minor portion of the tape 22 extending between the inner and outer wraps of the coil 26 past the access openings 28, 30 and 32 and around the guide pin 34. As an example, about 15% fiberglas fill in 5.72 cm. diameter hubs 14 of the polymer "Celcon" have been found to produce such results when used with 86 meters of the "Scotch Brand No. 158" tape 22 mentioned above.

With hubs 14 of the material and size described above carrying 86 meters of the "Scotch Brand No. 158" tape 22 it is preferred to initially set the force at the guide pin 34 at about 5 grams with the guide pin 34 initially positioned slightly closer to the wall 40 than shown in Figure 1 and with the splice 24 in or close to the outermost wrap on the coil 26. Upon initial running, the force at the guide pin 34 will increase to about 7 grams as the splice 24 moves through the innermost wrap of the coil 26. As the tape 22 is run through the cartridge 10, wear on the tape 22 will increase the length of the minor portion of the tape 22 extending around the guide pin 34 so that after substantial use of the cartridge 10, the force at the guide pin 34 may cycle between about 3 and 5 grams, but will still produce the desired relatively high and generally uniform tension in tape 22 being pulled past the heads 27 as is seen in Figure 3. When shorter lengths of the same tape 22 are used on the same hub 14, (e.g. 61 instead of 86 meters) Figure 3 is not applicable, and the initial force applied at the guide pin 34 must be higher (e.g. 7 instead of 5 grams) to produce a similar tension in the tape 22 being pulled from the innermost wrap of the coil 26.

As is taught in U.S. Patent No. 4,268,877 the ribs 18 restrict the force required to pull the tape 22 from the innermost wrap of the coil 26 by not only reducing friction between the fixed hub 14 and the innermost wrap on the coil 26, but also reducing friction between all the wraps of the coil 26 which must slide relative to each other as the coil 26 rotates. Also, the radius of the generally cylindrical hub 14 at its periphery defined by the ribs 15 preferably decreases slightly (e.g., by about 0.05 cm for a hub 14 with about a 2.7 cm average radius) around the hub 14 in the direction the coil 26 rotates from an edge 80 of the slot to a radiused edge 82 of the slot over which the inner wrap of tape bends as it exits the coil 26, which decreasing radius surprisingly decreases surging in the tension caused by the wraps of the tape in the coil 26 moving relative to each other.

A graphite lubricated polymeric sheet 78, which may be made from the same material as the tape 22, is positioned between the lower flange 20 and the lower side surface of the coil 26. This sheet 78 restricts cinching of the wraps of the tape 22 in the coil 26 about the hub 14 during rapid acceleration of the coil 26, apparently by providing a measure of tracking engagement with the edges of the wraps of tape in the coil to retain their original diameter during such acceleration.

During use of the cartridge 10 on a record/ broadcast machine the capstan 29 and pinch roller 31 pull tape through the slot 17 in the hub 14 from the innermost wrap of the coil 26, which causes the coil's innermost wrap to move along the annular ribs 18 defining the surface of the hub 14. From the slot 17, the tape moves across the central opening 16 of the hub where it longitudinally twists about 90 degrees and then passes along the outer surface of the bottom flange 20 through a channel between the bottom flange 20 and the bottom wall 36. The tape then twists back to the same orientation it had at the slot 17 as it moves between the flange 20 and the radiused edge 50 around which the tape changes direction and moves onto the surface of the guide 52. The tape moves about 90 degrees around the surface of the guide 52 and across the side surface of the guide 54 to the capstan 29, so that the concave guide surfaces of the guides 52 and 54 center the tape 22 across the concavities on their surfaces to transversely position the tape 22 in a predetermined location between the top and bottom walls 36 and 38 of the cartridge so that it will be properly located with respect to heads 27 in the access openings 28 and 30. Tape leaving the nip between the capstan 29 and the pinch roller 31 moves in a generally U-shaped pattern around the arcuate wall 56 and post 64 onto the movable pin 34 about which the tape passes about 180 degrees and moves onto the coil 26 as its outermost wrap. The spring 72 biases the movable pin to maintain a low tension in the length of tape 22 extending from the capstan 29 and around the coil 26 as its outermost wrap, which low tension results in a quite uniform higher tension in the tape leaving the slot 17 and extending from the slot 17 past the heads to the capstan 29. As the splice 24 between ends of the tape 22 (which splice 24 is about as thick as the tape 22 itself) moves through the coil 26 from its outermost to its innermost wrap, the length of the major portion of the tape 22 in the coil 26 will increase slightly due to the increased diameter of each wrap in the coil 26 overlaying the splice 24. Such increase in length of the major portion of the tape 22 in the coil 26 will decrease the length of the minor portion of the tape along the path past the access openings 28, 30, 32 and 33 between the innermost and outermost wraps of the coil 26, which decrease will be accommodated for by movement of the arm 66 and pin 34 toward its first position against the bias of the spring 72. Movement of the arm 66 and pin 34 under the influence of the spring 72 will also maintain tension in the minor portion of the tape as its length decreases as the splice 24 moves through the coil 26 and then increases suddenly as the splice 24 leaves the innermost wrap of the coil 26, or as relatively thick portions of the tape 22 (which are caused by normal minute variations in coating weights along the tape 22 and minute thickness variations in the backing of the tape 22) move into and out of radial alignment in the coil 26 as the wraps of tape in the coil move relative to each other. During such movement of the arm 66 the force applied by the spring 72 to that tape will change only slightly (e.g. about 3 grams) due to the long length of the spring 72, and the effect of the changes in tension in the outermost wrap of tape on the coil 26 caused by such change in bias on the arm 66 on the tension in the tape 22 at the innermost wrap of the coil 26 will be somewhat offset by the decrease in length of the outermost wrap of tape 22; all of which results in a higher tension of surprising uniformity in the tape 22 exiting the slot 17 for any position of the splice within the coil 26 (e.g., plus or minus about 7 grams or 1/4 ounce).

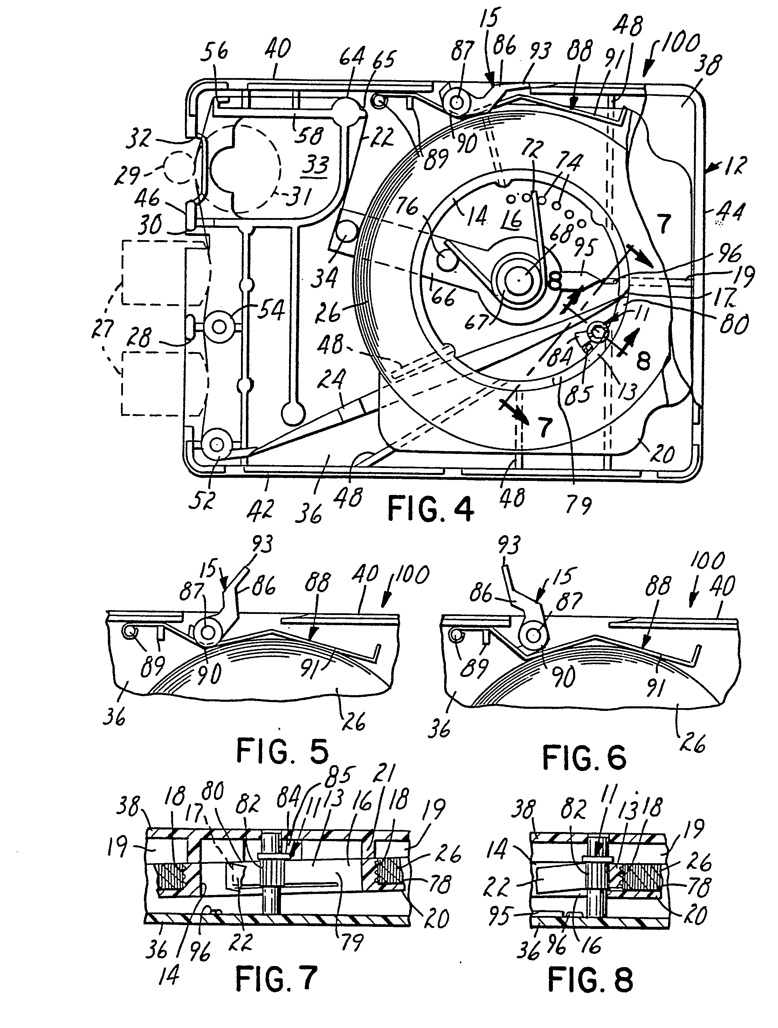

Referring now to Figures 4 through 8 of the drawing there is shown a second embodiment of a cartridge 100 according to the present invention. Except for the addition of structure in the cartridge 100 comprising (1) a cantilevered portion 13 of a hub 14 and a cam 11 for adjusting the location of the cantilevered portion 13 radially of the rest of the hub 14 that affords adjusting the length of a minor portion of an endless loop of strip material or magnetizable tape 22 extending between the inner and outer wrap of a coil 26 of the tape 22 on the hub 14, and (2) a lock assembly 15 that allows tape 22 in the cartridge 100 to be locked in place (such as during shipment), the cartridge 100 has essentially the same structure as the cartridge 10 described above. The same reference numerals have been used to identify structures in the cartridge 100 that are essentially the same as structures in the cartridge 10, and the above description of those structures in the cartridge 10 applies to those structures in the cartridge 100.

Unlike the cartridge 10, however, the cartridge 100 has no upper flange for the hub 14, but provides the function of such an upper flange by including a plurality of ridges 19 oriented radially of the hub 14 and joined at their inner ends by an annular ridge 21, which ridges 19 and 21 depend from and are integrally molded with a top wall 38 of the housing 12.

The arcuate cantilevered portion 13 of the hub 14 and the cam 11 which allows adjustment of the minor tape length between the outermost and innermost wrap of the tape in the coil 26 is best seen in Figures 4, 7 and 8. The cantilevered portion 13 of the hub 14 has a second end 79 that is fixed on the housing 12 opposite its first end 80 that defines one side of the slot 17. The cantilevered hub portion 13 is separated from the housing 12 between its first and second ends 80 and 79, and is resiliently flexible. The cam 11 has a peripheral surface which contacts the inner surface of the cantilevered hub portion 13, and which has portions at progressively increasing distances from the axis about which the cam 11 is rotatable, and thus can be rotated to move the cantilevered hub portion 13 outward or allow it to retract radially of the hub 14 to adjust the diameter of the coil 26 adjacent the cam 11. Because of the multiplying effect of the many wraps of tape in the coil 26, even small movements of the cantilevered hub portion 13 will make significant changes in the minor length of the tape (e.g., for about 86 meters or 282 feet of tape wrapped about 392 times in the coil 26, an outward movement of 0.076 mm or 0.003 inch of the cantilevered hub portion 13 at the cam 11 will cause a change of about 25.4 mm or 1 inch in the length of the minor tape portion). The end of the cam 11 at the top wall 38 has both a slot adapted to receive a screwdriver blade and a socket adapted to receive an allen wrench, either of which tools can be engaged with the cam through an opening in the top wall 38 into which the end of the cam 11 projects. The periphery of the cam 11 has axially extending spaced ribs 82 which mate with corresponding ribs on the cantilevered hub portion 13 to provide a detent that retains a set position of the cam 11. Rotation of the cam 11 is limited to less than 360 degrees (with the maximum and minimum diameters of the cam 11 adjacent the cantilevered hub portion 13 at opposite ends of the rotation) by a radial projection 84 on the cam 11 adapted to engage opposite ends of a block 85 depending from the top wall 38 at the opposite extremes of the cam's rotation.

The lock assembly 15 which allows the tape in the cartridge 100 to be locked in place compises a second portion or an arm 86 pivotably mounted on the housing 12 at a pin 87, and a first portion or a cantilever spring 88. The spring 88 has one coiled end retained by projections 89 along the side wall 40, a portion adjacent the projections 89 biased against a cam portion 90 of the arm 86, and a distal end portion 91 positioned adjacent the outer wrap of the coil 26. Pivoting of the arm 86 moves the lock assembly 15 between (1) a release position (Figure 4) at which a flat part of the arm's cam portion 90 adjacent the spring 88 allows the spring 88 to move to a position with its distal end portion 91 spaced from the coil 26 and a projecting portion 93 of the arm 86 is disposed within the periphery of the housing 12, at which release position the lock assembly 13 will not interfere with the movement of the tape 22 within the cartridge; and (2) a first lock position (Figure 5) at which a flat part of the arm's cam portion 90 adjacent the spring 88 presses it to a position at which its distal end portion 91 is pressed against the outer wrap of tape 22 on the coil 26 and the projecting portion 93 of the arm 86 projects through an opening in the sidewall 40 and beyond the periphery of the housing 12. Engagement of the spring 88 with the flats on the cam portion 90 of the arm 86 provides detent means for biasing the lock assembly 15 to the one of its positions that it is adjacent.

The cam portion 90 of the arm 86 also has a third flat part that can be rotated into engagement with the spring 88 to provide a second lock position (Figure 6) at which the distal end portion 91 of the spring 88 will be biased against a coil on the hub 14 of a lesser diameter than the diameter of the coil 26, which lesser diameter coil may result when less tape is supplied in the cartridge.

With either the first or second locking position of the lock assembly 15, however, the projecting portion 93 of the arm 86 will project from a portion of the housing 12 which must pass closely adjacent a part of a machine into which the cartridge 100 is inserted. Thus upon insertion of the cartridge 100 the projecting portion 93 of the arm 86 will engage the machine and will be moved into alignment with the side wall 40 of the cartridge 100, from whence the detent means will move the arm 86 to position the lock assembly 15 in its release position.

During use of the cartridge 100 on a record/ broadcast machine, the capstan 29 and pinch roller 31 of the machine pull tape through the slot 17 in the hub 14 from the innermost wrap of the coil 26, and past the heads 27 on the machine which are positioned in the access openings 28 and 30. After leaving the nip between the capstan 29 and the pinch roller 31 tape moves in a generally U-shaped pattern from the edge wall surfaces 64 and 65 about 180 degrees around the movable pin 34 and onto the coil 26 as its outermost wrap. The spring 72 biases the movable pin to maintain a low tension in the length of tape 22 extending from the capstan 29 to the outermost wrap of the coil 26, which low tension results in a quite uniform higher tension in the tape leaving the slot 17 and extending from the slot 17 past the heads to the capstan 29. As a splice 24 between ends of the tape 22 (which splice 24 is about as thick as the tape 22 itself) moves through the coil 26 from its outermost to its innermost wrap, the length of the major portion of the tape 22 in the coil 26 will increase slightly due to the increased diameter of each wrap in the coil 26 overlaying the splice 24. Such increase in length of the major portion of the tape 22 in the coil 26 will decrease the length of the minor portion of the tape along the path past the access openings 28, 30, 32 and 33 between the innermost and outermost wraps of the coil 26, which decrease will be accommodated for by movement of the arm 66 and pin 34 toward its first position against the bias of the spring 72. Movement of the arm 66 and pin 34 under the influence of the spring 72 will also maintain tension in the minor portion of the tape as its length decreases when the splice 24 leaves the innermost wrap of the coil 26, or as relatively thick portions of the tape 22 move into and out of radial alignment in the coil 26 as the wraps of tape in the coil move relative to each other.

Should wear of the tape 22 or other conditions within the cartridge 100 cause the range of movement of the arm 66 and pin 34 to change so that it produces an undesirably high or low tension in the tape 22, or so that the arm 66 contacts or is close to contacting one of the bosses 48 limiting its movement, the range of movement of the arm 66 can be easily adjusted while the cartridge 100 is inserted in a machine and the machine is moving the tape 22 in the cartridge 100. This adjustment is made by rotating the cam 11 via a screwdriver or allen wrench to increase or decrease the effective diameter of the hub 14. Selecting the proper range of movement for the arm 66 during such adjustment is facilitated by a pointer 95. projecting from the arm 66 and an indicating boss 96 on the bottom wall 38. The pointer 95 and boss 96 are in alignment when the arm 66 is in the center of its range of movement, and excursion of the pointer 95 on both sides of the boss 96 can be observed as the cam 14 is adjusted to obtain a proper adjustment.

CLAIMS:

1.  A cartridge comprising a housing adapted to be received in a machine and having access openings adapted to receive heads and a tape drive mechanism in said machine; a cylindrical hub on said housing at a position spaced from said access openings; an endless length of tape having a major portion wrapped about said hub to form a coil and a minor portion extending from the innermost wrap of the coil around the side surface of the coil to the outermost wrap of the coil; and guides on said housing for defining a tape path for guiding said minor portion from said innermost wrap past said access openings in a predetermined position for engagement by the heads and drive mechanism of the playback machine and to said outermost wrap; characterized in that said hub (14) is fixed on said housing (12) and has a central opening (16) and a slot (17) extending axially across the full width of the hub (14) and communicating with said central opening (16); the minor portion of the tape extends through the slot (17) into the central opening (16) and then around the side surface of the coil (26), and there is provided means for producing tension in the tape (22) being pulled from said coil (26) comprising a guide pin (34) guiding said minor portion between said access openings (28, 30, 32, 33) and the outermost wrap of said coil (26), means (66, 67, 68) mounting said guide pin (34) for movement between a first position providing a first path length between said access openings (28, 30, 32, 33) and said coil (26) and a second position providing a second path length longer than said first path length between said access openings (28, 30, 32, 33) and said coil (26), and means (72) for biasing said guide pin toward said second position with a low force to provide a low tension in the outermost wrap of the coil (26) so that with the tape drive mechanism of a said machine engaged with the minor portion of the tape between the slot (17) and the guide pin (34), a relatively high, generally uniform tension will result in the tape between the innermost wrap of the coil (26) and the drive mechanism.

2. A cartridge (10, 100) according to claim 1 further characterized in that said means for mounting said guide pin (34) comprises an arm (66) having a first end supporting said guide pin, and a second end (67) pivotably mounted about an axis on said housing (12) to afford movement of said pin (34) along an arcuate path adjacent the periphery of said coil (26) between said first and second positions.

3. A cartridge (10, 100) according to claim 2 further characterized in that said means for biasing said guide pin (34) comprises a spring (72) having a central coil about said axis at the second end (67) of said arm (66), a second end portion fixed to said arm (66), and an opposite first end portion, and said housing includes an array of lugs (74) about said axis, said first end portion being engaged with one of said lugs (74) and being adapted to engage any other of said lugs (74) to adjust the force applied to the tape by said guide pin (34).

4. A cartridge (10, 100) according to claim 1 or claim 2 further characterized in that said hub (14) is of a polymeric material having a filler to modify its coefficient of thermal expansion to a predetermined value so that during temperature increases of the cartridge (10, 100) the increase in the length of said tape (22) will be offset by the greater length of the tape (22) in the coil (26) due to the increase in thickness of the tape (22) and the increased diameter of the hub (14).

5. A cartridge according to claim 1 or claim 2 further characterized in that the radius of said hub (14) decreases slightly around the hub (14) in the direction the coil (26) rotates from one edge of said slot (17) to the other edge of said slot (17).

6.  A cartridge (100) according to claim 1 further characterised in that said hub (14) comprises a flexible cantilevered portion (13) having a first end (80) partially defining said slot (17), having a second end (79) spaced from said first end (80) that is fixed on said housing (12), said cantilevered portion (13) being separated from said housing (12)  between said first and second ends (79, 80); and means (11) for changing the position of said cantilevered portion (13) radially of said hub (14) to adjust the length of said minor portion and position said guide pin (34) at a desired position between said first and second positions.

7.  A cartridge (100) according to claim 6 further characterized in that said means for changing comprises a cam (11) rotatably mounted on said housing (12) and having a peripheral surface contacting the inner side of said cantilevered portion (13).

8.  A tape cartridge (100) according to claim 1 further characterized in that said cartridge (100) further includes a lock assembly (13) having first and second portions (86, 88) and being mounted on said housing (12) for movement between a release position at which said first portion (88) is spaced from said coil (26) and said second portion (86) is disposed within the periphery of said housing (12), and a first lock position with its first portion (88) contacting the outer surface of said coil (26) and said second portion (86) projecting beyond the periphery of said housing (12).

9.  A tape cartridge according to claim 8 further including detent means (88, 90) for biasing said lock assembly (13) to said release position when said lock assembly (13) is adjacent said release position, wherein the second portion (86) of said lock assembly is positioned to contact a said machine and to be moved to position said lock assembly (13) adjacent said release position upon insertion of said cartridge (12) into said machine.

10. A method for providing high, generally uniform tension in a portion of an endless loop of tape (22) moving across a head (27), comprising providing a fixed generally cylindrical hub (14) having a central opening (16) and a slot (17) extending axially across the full width of the hub (14) and communicating with its central opening (16); wrapping a major portion of the tape (22) about the hub (14) to form a coil (26) while allowing a minor portion of the tape (22) to extend from the innermost wrap of the coil (26) through the slot (17) into the central opening (16) of the hub (14), and around the side surface of the coil (26) to the outermost wrap of the coil (26); pulling the tape (22) from the slot (17) and across the head (27); and applying a light force to tension the minor portion of the tape (22) as it moves onto the outer wrap of the coil (26).

FIG. I

FIG. 2

FIG. 3

FIG. 4

FIG. 5

FIG. 6

FIG. 7

FIG. 8